# EUROPÄISCHE PATENTSCHRIFT

(11) **EP 3 747 070 B1**
(45) Veröffentlichungstag und Bekanntmachung des Hinweises auf die Patenterteilung: **01.12.2021**
(21) Anmeldenummer: 19702806.1
(22) Anmeldetag: 02.01.2019
(51) Int. Cl.: H01M 50/271, H01M 50/20, H01M 50/502, B60R 16/02

(54) **BATTERIEMODUL, BATTERIEPACK DIESES ENTHALTEND, SOWIE DEREN VERWENDUNG**
BATTERY MODULE, BATTERY PACK CONTAINING SAID BATTERY MODULE, AND USE THEREOF
MODULE DE BATTERIE, BLOC-BATTERIE CONTENANT CELUI-CI, AINSI QUE LEUR UTILISATION

(30) Priorität: 30.01.2018 DE 102018201355
(43) Veröffentlichungstag der Anmeldung: 09.12.2020
(73) Patentinhaber: Robert Bosch GmbH, 70442 Stuttgart (DE)
(72) Erfinder: REIMER, Eduard, 70734 Fellbach (DE); AKTUERK, Seref, 61184 Karben (DE); DITTERT, Thomas, 70199 Stuttgart (DE); OECHSLE, Matthias, 71254 Ditzingen-Hirschlanden (DE)
(86) Internationale Anmeldenummer: PCT/EP2019/050020
(87) Internationale Veröffentlichungsnummer: WO 2019/149458

(56) Entgegenhaltungen:
- EP-A1- 2 685 544
- EP-A1- 2 712 004
- WO-A1-2008/035874

## Beschreibung

Die vorliegende Erfindung bezieht sich auf ein Batteriemodul, ein Batteriepack dieses enthaltend, sowie deren Verwendung gemäß dem Oberbegriff der unabhängigen Patentansprüche.

### Stand der Technik

In Hybrid-, Plug-In-Hybrid- und Elektrofahrzeugen kommen elektrische Energiespeicher zum Einsatz, um die nötige Energie für einen Elektromotor, welcher den Antrieb unterstützt bzw. selbst als Antrieb dient, zu speichern. Derartige elektrische Energiespeicher sind beispielsweise in Form von Lithium-Ionen-Batterien realisiert, welche eine Vielzahl von einzelnen Batteriezellen enthalten, welche ihrerseits in einer Mehrzahl von Batteriemodulen miteinander seriell oder parallel elektrisch verschaltet sind. Dabei besteht der Bedarf, die unterschiedlichen Batteriemodule einer Batterie miteinander elektrisch zu verschalten, was unter Umständen auch über eine kabelgebundene Lösung erfolgen kann.

Weiterhin benötigen derartige elektrische Energiespeicher ein ausgeklügeltes System zur Überwachung der Batteriemodule bzw. der darin enthaltenen Battriezellen. Üblicherweise weisen beispielsweise entsprechende Batteriemodule oder auch Batteriepacks, die eine Mehrzahl an Batteriemodulen umfassen, jeweils Zellüberwachungseinheiten auf, die auch als Cell Supervision Cirquits (CSC) bezeichnet werden. Die Zellüberwachungseinheiten unterschiedlicher Batteriemodule bzw. Batteriepacks desselben elektrischen Energiespeichers stehen dabei in einer datenleitenden Verbindung, die ihrerseits ebenfalls häufig kabelgebunden realisiert ist.

Weiterhin weisen derartige elektrische Energiespeicher üblicherweise ein
zentrales Batteriesteuergerät auf, das seinerseits beispielsweise mit unterschiedlichen Zellüberwachungseinheiten oder auch direkt mit Batteriemodulen oder Batteriepacks des elektrischen Energiespeichers in datenleitendem Kontakt steht. Dies erfolgt ebenfalls über eine entsprechende Kabelverbindung. Da sowohl die Positionierung des Batteriesteuergerätes wie auch der Zellüberwachungseinheiten variabel ist und auch die Anzahl an Batteriemodulen und Batteriepacks innerhalb eines elektrischen Energiespeichers variabel ist und somit auch deren Positionierung innerhalb des elektrischen Energiespeichers, werden für die entsprechende Anzahl an Kabelverbindungen Kabel unterschiedlicher Kabellängen benötigt.

Demzufolge ist für die Fertigung entsprechender elektrischer Energiespeicher eine Vielzahl von Kabeln unterschiedlicher Länge nötig, deren korrekte Bereitstellung aufwändig und gegebenenfalls auch fehlerträchtig ist. Darüber hinaus limitiert ein solches Set an Anschlusskabeln vorgegebener Länge die Positionierungsmöglichkeiten von Steuergeräten und Batteriemodulen innerhalb des elektrischen Energiespeichers.

Diesbezüglich ist aus der DE 10 2013 009 713 A1 eine Batterie mit einem Kabelkanal zur Aufnahme eines Kabelbaums für ein Hybrid- oder Elektrofahrzeug bekannt. Dieser Kabelkanal weist Montagehilfen auf, in welche ein entsprechendes Kabel eingeclipst werden kann, so dass dieses dort befestigt ist. Weiterhin ist aus der US 2009/0129044 A1 eine Struktur zur Führung eines Kabelkanals an einem Batteriegehäuse bekannt. Das Kabel kann dabei außenseitig an einem Batteriegehäuse geführt sein.

Darüber hinaus ist der US 7,604,507 B1 ein Kabel zu entnehmen, welches an einem Batteriemodul außen entlang geführt wird, wobei zur Führung des Kabels Clips-Elemente vorgesehen sind. Aus der WO 2011/078478 A2 ist ein Batteriemanagementsystem für eine Hochvoltbatterie eines Hybridfahrzeuges bekannt, deren Module über Kabel miteinander verschaltet sind.

In der WO 2008/035874 A1 sind Batteriemodule mit Gehäusen und einer Vielzahl von elektrisch verbundenen Batteriezellen offenbart. Die Anschlusspunkte einzelner Batteriemodule werden über Kabel gleicher Länge mit einem gemeinsamen Verbinder verbunden.

### Offenbarung der Erfindung

Erfindungsgemäß wird ein Batteriemodul, ein Batteriepack dieses enthaltend sowie deren Verwendung mit den kennzeichnenden Merkmalen der unabhängigen Patentansprüche zur Verfügung gestellt.

### Vorteile der Erfindung

Erfindungsgemäß wird ein Batteriemodul zur Verfügung gestellt, dass beispielsweise eine Mehrzahl oder Vielzahl an Batteriezellen, wie beispielsweise Lithium-Ionen-Batteriezellen aufweist, die beispielsweise seriell oder parallel elektrisch miteinander verbunden sind. Die Batteriezellen sind beispielsweise in einem Batteriemodulgehäuse positioniert, das dem Schutz der Batteriezellen vor äußeren Einflüssen dient. Das Batteriemodulgehäuse weist zusätzlich mindestens einen Anschlusspunkt auf, beispielsweise für ein stromführendes Kabel zur elektrischen Verbindung des Batteriemoduls mit einem weiteren Batteriemodul oder mit einem Batterieterminal eines elektrischen Energiespeichers, der das erfindungsgemäße Batteriemodul beinhaltet.

Der Anschlusspunkt kann auch zur Kontaktierung eines datenleitenden Kabels dienen, wodurch das Batteriemodul in datenleitender Verbindung beispielsweise mit einem Batteriesteuergerät, einer Zellüberwachungseinheit oder einer Zellkontaktierungseinheit steht.

Um den Anschluss eines solchen stromführenden oder datenleitenden Kabels zu ermöglichen, weist das Batteriemodul mindestens vier Kabelführungen auf. Unter einer Kabelführung wird dabei eine Kabelführungsstrecke innerhalb oder an einer Innen- oder Außenwand des Batteriemodulgehäuses verstanden, die entweder kontinuierlich oder in periodischen Abständen mit Fixierungsmöglichkeiten für ein zu führendes Kabel versehen ist. Eine kontinuierliche Fixierung ist beispielsweise gewährleistet durch das Vorsehen eines entsprechend dimensionierten Kabelkanals, eine periodisch vorgesehene Fixierung erfolgt beispielsweise durch das Vorsehen entsprechender Halteclips für ein zu führendes Kabel. Selbstverständlich ist auch eine Kombination beider Realisierungsmöglichkeiten denkbar in Form eines mit Halteclipsen versehenen Kabelkanals.

Die mindestens vier Kabelführungen des Batteriemoduls haben jeweils ihren Beginn an einem der Anschlusspunkte für ein datenleitendes oder stromführendes Kabel und enden an einem davon beabstandeten geeignet wählbaren Punkt an der Peripherie bzw. an einer Außenkante des Batteriemoduls.

Erfindungsgemäß ist nun vorgesehen, dass die Länge dieser Kabelführungen, bezeichnet als Kabelführungslängen, in Form einer Distanz von dem jeweiligen Anschlusspunkt entlang der Kabelführung zu ihrem jeweiligen Endpunkt an der Peripherie bzw. an einer Außenkante des Batteriemoduls so gestaltet sind, dass die Summe einer Kabelführungslänge einer ersten Kabelführung beginnend an einem ersten Anschlusspunkt und endend an einer ersten Außenkante des Batteriemodulgehäuses und der Kabelführungslänge einer zweiten Kabelführung, beginnend an einem zweiten Anschlusspunkt und endend an einer der ersten Außenkante gegenüberliegenden Außenkante des Batteriemodulgehäuses gleich der Summe aus einer Kabelführungslänge einer dritten Kabelführung beginnend am ersten Anschlusspunkt und endend an einer zweiten Außenkante des Batteriemodulgehäuses und einer Kabelführungslänge einer vierten Kabelführung beginnend am zweiten Anschlusspunkt und endend an einer der zweiten Außenkante gegenüberliegenden Außenkante des Batteriemodulgehäuses ist.

Gemäß einer weiteren Ausführungsform der vorliegenden Erfindung ist ein Batteriemodul mit einer Mehrzahl an miteinander elektrisch parallel oder seriell elektrisch kontaktierten Batteriezellen und mit einem Batteriemodulgehäuse vorgesehen, das mit mindestens zwei Anschlusspunkten für ein datenleitendes oder stromführendes Kabel und mit mindestens vier Kabelführungen zur Führung eines an den Anschlusspunkten angeschlossenen datenleitenden oder stromführenden Kabels zu einem weiteren Batteriemodul oder Datenempfänger versehen ist, wobei die Kabelführungen an Außenkanten des Batteriemodulgehäuses enden. Jede der Kabelführungen weist eine Kabelführungslänge beginnend an einem der Anschlusspunkte und endend an einer Außenkante des Batteriemodulgehäuses auf.

Dabei ist die Summe einer Kabelführungslänge einer ersten Kabelführung beginnend an einem ersten Anschlusspunkt und endend an einer ersten Außenkante des Batteriemodulgehäuses und der Kabelführungslänge einer zweiten Kabelführung, beginnend an einem zweiten Anschlusspunkt und ebenfalls endend an der ersten Außenkante des Batteriemodulgehäuses gleich der Summe aus einer Kabelführungslänge einer dritten Kabelführung beginnend am ersten Anschlusspunkt und endend an einer der ersten Außenkante gegenüberliegenden Außenkante des Batteriemodulgehäuses und einer Kabelführungslänge einer vierten Kabelführung beginnend am zweiten Anschlusspunkt und ebenfalls endend an der der ersten Außenkante gegenüberliegenden Außenkante des Batteriemodulgehäuses.

Der besondere Vorteil dieser Maßnahmen besteht darin, dass bei Verwendung mehrerer identisch ausgeführter Batteriemodule und bei einer Positionierung dieser identisch ausgeführten Batteriemodule zueinander derart, dass die Positionierung von Endpunkten der jeweiligen Kabelführungen an der Peripherie eines ersten und eines zweiten Batteriemodules mit einem geringst möglichen Abstand zueinander erfolgt, die Länge eines Kabels, das einen ersten Anschlusspunkt eines ersten Batteriemoduls mit einem zweiten Anschlusspunkt eines zweiten Batteriemoduls verbindet, für viele, insbesondere alle möglichen Positioniermöglichkeiten der beiden Batteriemodule zueinander gleich ist. Auf diese Weise kann für jede der gewählten Positioniermöglichkeiten von erstem und zweitem Batteriemodul zueinander ein Kabel mit gleicher Länge verwendet werden, sodass die Verwendung unterschiedlich langer Kabel im Rahmen einer solchen Konstruktion eines Batteriepacks aus mehreren Batteriemodulen entfällt.

In diesem Fall ist es für die Länge des zu verwendenden Kabels nicht entscheidend, ob beispielsweise eine datenleitende oder eine stromführende Kabelverbindung zwischen dem ersten und zweiten Batteriemodul erfolgt und über welche Kabelführungen dies geschieht. Weiterhin kann diese Kabelverbindung auch über eine beliebige Kombination der Kabelführungen eines ersten und eines zweiten Batteriemoduls erfolgen: Es werden stets die gleichen Kabellängen für ein entsprechendes datenleitendes oder stromführendes Kabel von einem ersten Anschlusspunkt des ersten Batteriemoduls zu einem zweiten Anschlusspunkt des zweiten Batteriemoduls benötigt.

Weitere vorteilhafte Ausführungsformen der vorliegenden Erfindung sind Gegenstand der Unteransprüche.

So ist es von Vorteil, wenn die Kabelführungen als Kabelkanäle ausgeführt sind, welche beispielsweise in eine Außenfläche des Batteriemodulgehäuses eingeprägt sind. Der Vorteil dieser Ausführungsform besteht darin, dass die Verlegung stromführender bzw. datenleitender Kabel in einem geschlossenen Zustand des Batteriemodulgehäuses dennoch auf einer Außenfläche des Batteriemoduls erfolgen kann, und somit im Umgang mit einem derartigen Batteriemodul eine höhere Sicherheit besteht. Wird die Führung entsprechender Kabel in Kabelkanälen vorgenommen, die in die Oberfläche des Batteriemodulgehäuses eingeprägt sind, so wird durch das Vorsehen entsprechender Kabel an der Oberfläche des Batteriemodulgehäuses der für das Batteriemodulgehäuse benötigte Bauraum innerhalb eines elektrischen Energiespeichers nicht vergrößert, sondern es ist möglich, mehrere Batteriemodule so nebeneinander zu positionieren, dass deren Batteriemodulgehäuse in einem flächigen, physischen Kontakt miteinander stehen.

Weiterhin ist es von Vorteil, wenn die Anschlusspunkte zur Kontaktierung eines datenleitenden bzw. stromführenden Kabels an einem Deckel des Batteriemodulgehäuses positioniert sind, und von diesen ausgehend mindestens vier Kabelführungen vorgesehen sind, welche in der Ebene des Batteriemoduldeckels verlaufen und welche jeweils an einer Außenkante des Batteriemoduldeckels enden. Der besondere Vorteil dieser Ausführungsform besteht darin, dass beispielsweise bei der Herstellung eines Batteriepacks, der seinerseits eine Mehrzahl von Batteriemodulen umfasst, eine flächige Anordnung der Batteriemodule in einer Ebene ermöglicht wird, wobei bei Verwendung identisch ausgeführter Batteriemodule eine beliebige Positionierung von Batteriemodulen nebeneinander in der Ebene erfolgen kann, und - sofern die Endpunkte entsprechender Kabelführungen entsprechender Batteriemodule mit einem möglichst geringem Abstand zueinander vorgesehen sind - stets Kabel derselben Länge zur datenleitenden bzw. stromführenden Kontaktierung zweier benachbarter Batteriemodule verwendet werden können. Auf diese Weise wird stets nur ein Set von datenleitenden bzw. stromführenden Kabel der gleichen Länge benötigt.

Gegenstand der Erfindung ist darüber hinaus ein Batteriepack, das eine Mehrzahl von Batteriemodulen aufweist. Dabei kann ein elektrischer Energiespeicher mehrere Batteriepacks beinhalten, es ist jedoch auch möglich, dass ein elektrischer Energiespeicher durch einen einzigen Batteriepack, umfassend eine Mehrzahl von Batteriemodulen, gebildet ist.

Ein solcher Batteriepack umfasst eine Mehrzahl oder Vielzahl von Batteriemodulen, welche ihrerseits eine Mehrzahl oder Vielzahl an Batteriezellen umfassen. Dabei sind die Batteriezellen eines Batteriemoduls seriell oder parallel miteinander elektrisch verschaltet. Die Batteriemodule weisen jeweils ein Batteriemodulgehäuse auf, an dem sich mindestens zwei Anschlusspunkte für ein datenleitendes oder stromführendes Kabel befinden. Die Batteriemodule weisen weiterhin Kabelführungen auf, die an dem jeweiligen Anschlusspunkt eines Batteriemoduls beginnen und an einem Endpunkt an einer Außenperipherie bzw. einer Außenkante des Batteriemoduls enden.

Werden mindestens drei Batteriemodule benachbart zueinander positioniert, so ist es erfindungsgemäß vorgesehen, dass ein erstes Kabel, das beispielsweise einen ersten Anschlusspunkt eines ersten Batteriemoduls mit einem zweiten Anschlusspunkt eines zweiten Batteriemoduls datenleitend oder stromführend verbindet und welches in Kabelführungen des ersten und zweiten Batteriemoduls geführt ist, die gleiche Kabelführungslänge aufweist, wie ein zweites stromführendes oder datenleitendes Kabel, welches den zweiten Anschlusspunkt des zweiten Batteriemoduls mit einem dritten Anschlusspunkt des dritten Batteriemoduls datenleitend der stromführend verbindet.

Gemäß einer alternativen erfindungsgemäßen Ausführungsform der vorliegenden Erfindung ist ein Batteriepack vorgesehen, der eine Mehrzahl von Batteriemodulen aufweist. Ein solcher Batteriepack umfasst eine Mehrzahl oder Vielzahl von Batteriemodulen, welche ihrerseits eine Mehrzahl oder Vielzahl an Batteriezellen umfassen. Dabei sind die Batteriezellen eines Batteriemoduls seriell oder parallel miteinander elektrisch verschaltet. Die Batteriemodule weisen jeweils ein Batteriemodulgehäuse auf, an dem sich mindestens ein Anschlusspunkt für ein datenleitendes oder stromführendes Kabel befindet. Die Batteriemodule weisen weiterhin Kabelführungen auf, die an dem jeweiligen Anschlusspunkt eines Batteriemoduls beginnen und an einem Endpunkt an einer Außenperipherie des Batteriemoduls enden.

Werden mindestens zwei Batteriemodule benachbart zueinander positioniert, so ist es erfindungsgemäß vorgesehen, dass ein einen ersten Anschlusspunkt des ersten Batteriemoduls mit einem zweiten Anschlusspunkt eines zweiten Batteriemoduls verbindendes und in den Kabelführungen des ersten und zweiten Batteriemoduls geführtes Kabel die gleiche Länge aufweist wie ein einen zweiten Anschlusspunkt des ersten Batteriemoduls mit einem ersten Anschlusspunkt des zweiten Batteriemoduls verbindendes und in den Kabelführungen des ersten und zweiten Batteriemoduls geführtes zweites datenleitendes oder stromführendes Kabel.

Gemäß einer weiteren alternativen erfindungsgemäßen Ausführungsform der vorliegenden Erfindung ist ein Batteriepack vorgesehen, der eine Mehrzahl von Batteriemodulen aufweist. Ein solcher Batteriepack umfasst eine Mehrzahl oder Vielzahl von Batteriemodulen, welche ihrerseits eine Mehrzahl oder Vielzahl an Batteriezellen umfassen. Dabei sind die Batteriezellen eines Batteriemoduls seriell oder parallel miteinander elektrisch verschaltet. Die Batteriemodule weisen jeweils ein Batteriemodulgehäuse auf, an dem sich mindestens ein Anschlusspunkt für ein datenleitendes oder stromführendes Kabel befindet. Die Batteriemodule weisen weiterhin Kabelführungen auf, die an dem jeweiligen Anschlusspunkt eines Batteriemoduls beginnen und an einem Endpunkt an einer Außenperipherie des Batteriemoduls enden.

Werden mindestens zwei Batteriemodule benachbart zueinander positioniert, so ist es erfindungsgemäß vorgesehen, dass zwei erste Kabelführungen an einer ersten Außenkante eines Batteriemoduldeckels eines ersten Batteriemoduls enden und zwei zweite Kabelführungen auf einer der ersten Außenkante benachbarten zweiten Außenkante eines Batteriemoduldeckels eines zweiten Batteriemoduls, und dass die Summe der Kabelführungslängen der ersten Kabelführungen, die an der ersten Außenkante enden, genauso groß ist wie die Summe der Kabelführungslängen der zweiten Kabelführungen, die an der zweiten Außenkante enden.

Der besondere Vorteil dieser Maßnahmen besteht darin, dass unabhängig von der Positionierung entsprechender insbesondere in ihrer bisherigen Form identisch ausgeführter Batteriemodule stets Kabel einer vergleichbaren Längenerstreckung verwendet werden können und somit die Herstellung eines entsprechenden Batteriepacks deutlich vereinfacht wird.

Das erfindungsgemäße Batteriemodul bzw. das erfindungsgemäße Batteriepack kann in vorteilhafter Weise verwendet werden in Kraftfahrzeuganwendungen wie beispielsweise in Elektro- der Hybridfahrzeugen, in portablen Einrichtungen zur Datenverarbeitung oder Telekommunikation, in elektrischen Handwerkzeugen oder in stationären Speichern für insbesondere regenerativ erzeugte elektrische Energie. Dabei sind das erfindungsgemäße Batteriemodul bzw. das erfindungsgemäße Batteriepack vorzugsweise als wiederaufladbare Sekundärbatterien aufgebaut.

### Kurze Beschreibung der Zeichnung

Beispielhafte Ausführungsformen der vorliegenden Erfindung sind in der Zeichnung dargestellt und in der nachfolgenden Figurenbeschreibung näher erläutert. Es zeigt:
- Figur 1: eine perspektivische Darstellung eines erfindungsgemäßen Batteriemoduls gemäß einer ersten Ausführungsform der vorliegenden Erfindung,
- Figur 2: eine schematische Darstellung eines Batteriemoduls gemäß einer zweiten Ausführungsform der vorliegenden Erfindung und
- Figur 3: eine schematische Aufsicht auf einen Batteriepack gemäß einer weiteren vorteilhaften Ausführungsform der vorliegenden Erfindung.

### Ausführungsformen der Erfindung

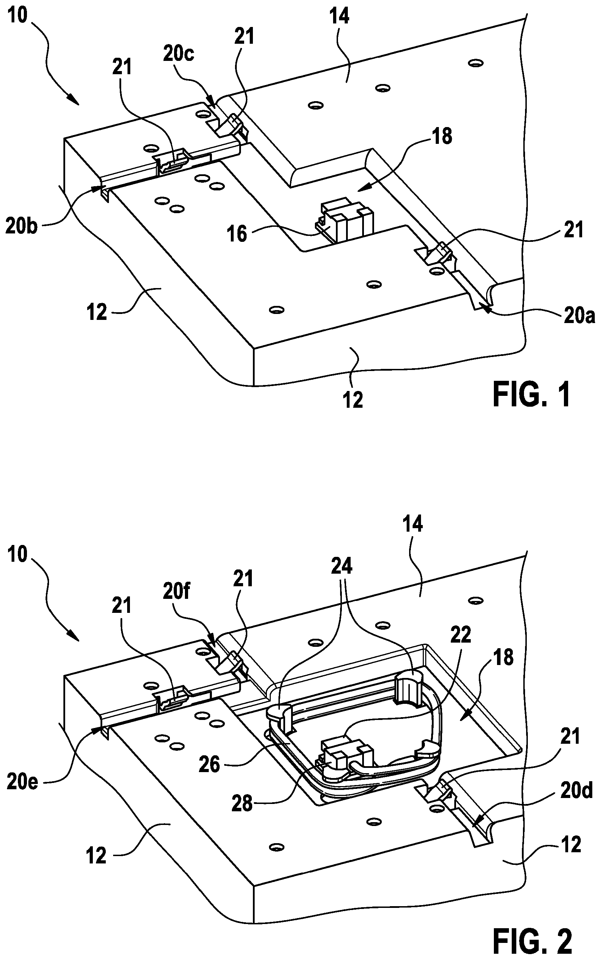

In Figur 1 ist ein Batteriemodul 10 gemäß einer ersten Ausführungsform der vorliegenden Erfindung dargestellt. Das Batteriemodul 10 umfasst in Figur 1 nicht dargestellte Batteriezellen, die beispielsweise seriell oder parallel elektrisch miteinander verbunden sind. Das Batteriemodul 10 umfasst ein Batteriemodulgehäuse, das Seitenwände 12 sowie einen Gehäusedeckel 14 umfasst. Der Gehäusedeckel 14 weist beispielsweise einen ersten Anschlusspunkt 16 auf, der beispielsweise einer elektrischen Kontaktierung des Batteriemoduls 10 oder einer datentechnischen Kontaktierung des Batteriemoduls 10 dient. Eine datentechnische Kontaktierung liegt beispielsweise dann vor, wenn über den Anschlusspunkt 16 Messsignale beispielsweise von in dem Batteriemodul verbauten Sensoren übertragen werden können oder wenn der Anschlusspunkt 16 mit Messleitungen, die ihrerseits mit einzelnen Batteriezellen des Batteriemoduls 10 verbunden sind, in elektrischem Kontakt steht. Der erste Anschlusspunkt 16 ist dabei vorzugsweise in einer Aussparung 18 des Gehäusedeckels 14 positioniert.

Um eine elektrische oder datentechnische Kontaktierung des Batteriemoduls 10 über den ersten Anschlusspunkt 16 zu gewährleisten, weist das Batteriemodul 10 mindestens drei, vorzugsweise vier bis sechs Kabelführungen 20a, 20b, 20c auf, die der Fixierung eines stromführenden oder datenleitenden, in Figur 1 nicht dargestellten Kabels dienen. Die Kabelführungen 20a -20c verbinden den ersten Anschlusspunkt 18 vorzugsweise mit unterschiedlichen Außenkanten des Gehäusedeckels 14 und enden somit in der Außenperipherie des Gehäusedeckels 14.

So endet in Figur 1 beispielsweise eine erste Kabelführung 20a an einer ersten Längskante des Batteriemoduls 10 bzw. des Gehäusedeckels 14, eine zweite Kabelführung 20b an einer zweiten Außenkante des Gehäusedeckels 14 und eine dritte Kabelführung 20c an einer zweiten Längskante des Gehäusedeckels 14, welche der ersten Längskante des Gehäusedeckels 14 gegenüberliegt.

Die Kabelführungen 20a - 20c sind vorzugsweise als Vertiefungen im Gehäusedeckel 14 ausgestaltet. Der Vorteil dieser Ausführungsform besteht darin, dass bei Kontaktierung des ersten Anschlusspunktes 16 durch ein entsprechendes Kabel dieses Kabel in den Vertiefungen der Kabelführungen 20a - 20c geführt werden kann und somit das kontaktierte Batteriemodul 10 nicht mehr Bauraum einnimmt, als ein nicht kontaktiertes Batteriemodul 10. Dies erlaubt weiterhin einen flächenbündigen Einbau mehrerer Batteriemodule 10 in einer unmittelbar benachbarten Bauweise. Das Batteriemodul 10 umfasst dabei vorzugsweise mindestens zwei Anschlusspunkte 16.

In Figur 2 ist ein Batteriemodul 10 gemäß einer zweiten Ausführungsform der vorliegenden Erfindung dargestellt. Es bezeichnen weiterhin gleiche Bezugszeichen gleiche Bauteilkomponenten wie in Figur 1.

Das in Figur 2 dargestellte Batteriemodul 10 weist einen zweiten Anschlusspunkt 22 auf, an den beispielsweise ein entsprechendes stromführendes oder datenleitendes Kabel 26 vorzugsweise unlösbar befestigt ist, beispielsweise durch einen Verschweißvorgang. In der Vertiefung 18 des zweiten Anschlusspunktes 22 sind Fixiervorrichtungen 24 vorgesehen, die ein Aufwickeln eines entsprechenden Kabels 26 innerhalb der Vertiefung 18 erlauben. Das Kabel 26 weist beispielsweise einen Endstecker 28 auf, mit dem das Kabel 26 beispielsweise an einem ersten Anschlusspunkt eines benachbarten Batteriemoduls 10 befestigt werden kann.

Weiterhin weisen zweite Kabelführungen 20d - 20f beispielsweise Halteclipse 21 auf, die der Fixierung entsprechender Kabel 26 innerhalb der Kabelführungen 20d bis 20f gewährleisten.

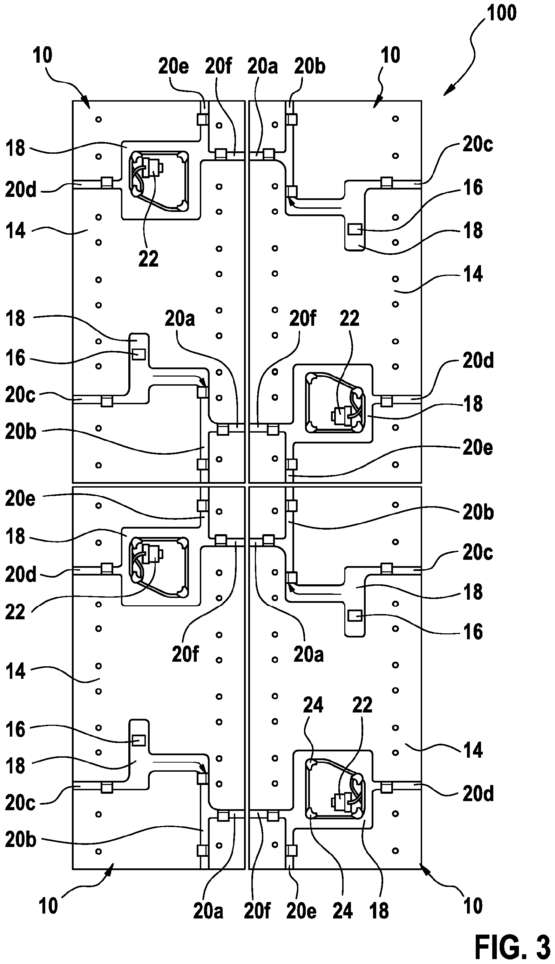

In Figur 3 ist ein Batteriepack 100 dargestellt, der eine Mehrzahl an Batteriemodulen 10 gemäß den Figuren 1 und 2 aufweist. Es bezeichnen weiterhin gleiche Bezugszeichen gleiche Bauteilkomponenten wie in den Figuren 1 und 2.

Betrachtet man ein einzelnes Batteriemodul 10, so weist dieses einen ersten Anschlusspunkt 16 und einen zweiten Anschlusspunkt 22 auf. Der erste Anschlusspunkt 16 weist erste Kabelführungen 20a - 20c auf und der zweite Anschlusspunkt 22 weist zweite Kabelführungen 20d - 20f auf.

Dabei weist jede der Kabelführungen 20a - 20f eine Kabelführungslänge beginnend an einem der Anschlusspunkte 16, 22 und endend an einer Außenkante des Batteriemodulgehäuses auf. Dabei ist die Summe einer Kabelführungslänge einer ersten Kabelführung 20a - 20c beginnend am ersten Anschlusspunkt 16 und endend an einer ersten Außenkante des Batteriemodulgehäuses und der Kabelführungslänge einer zweiten Kabelführung 20d - 20f, beginnend am zweiten Anschlusspunkt und endend an einer der ersten Außenkante gegenüberliegenden Außenkante des Batteriemodulgehäuses, gleich der Summe aus einer Kabelführungslänge einer dritten Kabelführung 20a - 20c beginnend am ersten Anschlusspunkt 16 und endend an einer zweiten Außenkante des Batteriemodulgehäuses und einer Kabelführungslänge einer vierten Kabelführung 20d - 20f beginnend am zweiten Anschlusspunkt und endend an einer der zweiten Außenkante gegenüberliegenden Außenkante des Batteriemodulgehäuses.

Alternativ weist jede der Kabelführungen 20a - 20f eine Kabelführungslänge beginnend an einem der Anschlusspunkte 16, 22 und endend an einer Außenkante des Batteriemodulgehäuses bzw. Gehäusedeckels 14 auf. Dabei ist die Summe einer Kabelführungslänge einer ersten Kabelführung 20a - 20c beginnend am ersten Anschlusspunkt 16 und endend an einer ersten Außenkante des Batteriemodulgehäuses und der Kabelführungslänge einer zweiten Kabelführung 20d - 20f, beginnend am zweiten Anschlusspunkt 22 und ebenfalls endend an der ersten Außenkante des Batteriemodulgehäuses, gleich der Summe aus einer Kabelführungslänge einer dritten Kabelführung 20a - 20c beginnend am ersten Anschlusspunkt 16 und endend an einer der ersten Außenkante gegenüber liegenden Außenkante des Batteriemodulgehäuses und einer Kabelführungslänge einer vierten Kabelführung 20d - 20f beginnend am zweiten Anschlusspunkt 22 und ebenfalls endend an der der ersten Außenkante gegenüberliegenden Außenkante des Batteriemodulgehäuses.

Weiter alternativ enden zwei erste Kabelführungen 20a, 20f eines ersten Batteriemoduls 10 an einer ersten Außenkante des Gehäusedeckels 14 des ersten Batteriemoduls 10 und zwei zweite Kabelführungen 20a, 20f eines zweiten Batteriemoduls 10 auf einer der ersten Außenkante benachbarten zweiten Außenkante des Gehäusedeckels 14 des zweiten Batteriemoduls 10. Dabei ist die Summe der Kabelführungslängen der ersten Kabelführungen 20a, 20f, die an der ersten Außenkante enden, genauso groß ist wie die Summe der Kabelführungslängen der zweiten Kabelführungen 20a, 20f, die an der zweiten Außenkante enden.

Daraus ergibt sich resultierend, dass in Bezug auf den Batteriepack 100 die Länge eines Kabels 26, welches einen ersten Anschlusspunkt 16 eines ersten Batteriemoduls 10 mit einem zweiten Anschlusspunkt 22 eines benachbarten weiteren Batteriemoduls 10 verbindet, identisch ist zu der Länge eines Kabels 26, welches einen zweiten Anschlusspunkt 22 des ersten Batteriemoduls 10 mit einem ersten Anschlusspunkt 16 eines benachbarten zweiten Batteriemoduls 10 verbindet. Auf diese Weise können eine Mehrzahl oder Vielzahl von insbesondere identisch konfigurierten Batteriemodulen 10 beispielsweise in einer horizontalen Anordnung gruppiert werden und mittels Kabel einer einzigen Kabellänge untereinander stromführend oder signalleitend verbunden werden.

Zusätzlich oder alternativ ist es möglich, insbesondere gleichartig gestaltete Batteriemodule 10 anstatt in einer horizontalen Ebene zusätzlich oder alternativ in einer vertikalen Ebene anzuordnen. Dazu sind die Kabelführungen 20a - 20f alternativ oder zusätzlich in Außenwänden oder im Bodenbereich des Modulgehäuses der Batteriemodule 10 geführt. Auch dort sind sie vorzugsweise als Vertiefungen in der Gehäusewand bzw. im Boden des Gehäuses vorgesehen. Diese Ausführungsform erlaubt die kubische Anordnung einer Vielzahl von Batteriemodulen zur Ausbildung eines entsprechenden Batteriepacks 100.

## Patentansprüche

1. Batteriemodul mit einer Mehrzahl an miteinander elektrisch parallel oder seriell elektrisch kontaktierten Batteriezellen und mit einem Batteriemodulgehäuse, das mit mindestens zwei Anschlusspunkten für ein datenleitendes oder stromführendes Kabel und mit mindestens vier Kabelführungen zur Führung eines an den Anschlusspunkten angeschlossenen datenleitenden oder stromführenden Kabels zu einem weiteren Batteriemodul oder Datenempfänger versehen ist, wobei die Kabelführungen an unterschiedlichen Außenkanten des Batteriemodulgehäuses enden, **dadurch gekennzeichnet, dass** jede der Kabelführungen (20a - 20f) eine Kabelführungslänge beginnend an einem der Anschlusspunkte (16, 22) und endend an einer Außenkante des Batteriemodulgehäuses aufweist, und dass die Summe einer Kabelführungslänge einer ersten Kabelführung (20a - 20c) beginnend an einem ersten Anschlusspunkt (16) und endend an einer ersten Außenkante des Batteriemodulgehäuses und der Kabelführungslänge einer zweiten Kabelführung (20d - 20f), beginnend an einem zweiten Anschlusspunkt (22) und endend an einer der ersten Außenkante gegenüberliegenden Außenkante des Batteriemodulgehäuses gleich der Summe ist aus einer Kabelführungslänge einer dritten Kabelführung (20a - 20c) beginnend am ersten Anschlusspunkt (16) und endend an einer zweiten Außenkante des Batteriemodulgehäuses und einer Kabelführungslänge einer vierten Kabelführung (20d - 20f)beginnend am zweiten Anschlusspunkt (22) und endend an einer der zweiten Außenkante gegenüberliegenden Außenkante des Batteriemodulgehäuses.

2. Batteriemodul mit einer Mehrzahl an miteinander elektrisch parallel oder seriell elektrisch kontaktierten Batteriezellen und mit einem Batteriemodulgehäuse, das mit mindestens zwei Anschlusspunkten für ein datenleitendes oder stromführendes Kabel und mit mindestens vier Kabelführungen zur Führung eines an den Anschlusspunkten angeschlossenen datenleitenden oder stromführenden Kabels zu einem weiteren Batteriemodul oder Datenempfänger versehen ist, wobei die Kabelführungen an Außenkanten des Batteriemodulgehäuses enden, **dadurch gekennzeichnet, dass** jede der Kabelführungen (20 - 20f) eine Kabelführungslänge beginnend an einem der Anschlusspunkte (16, 22) und endend an einer Außenkante des Batteriemodulgehäuses aufweist, und dass die Summe einer Kabelführungslänge einer ersten Kabelführung (20a - 20c) beginnend an einem ersten Anschlusspunkt (16) und endend an einer ersten Außenkante des Batteriemodulgehäuses und der Kabelführungslänge einer zweiten Kabelführung (20d - 20f), beginnend an einem zweiten Anschlusspunkt (22) und ebenfalls endend an der ersten Außenkante des Batteriemodulgehäuses gleich der Summe ist aus einer Kabelführungslänge einer dritten Kabelführung (20a - 20c) beginnend am ersten Anschlusspunkt (16) und endend an einer der ersten Außenkante gegenüber liegenden Außenkante des Batteriemodulgehäuses und einer Kabelführungslänge einer vierten Kabelführung (20d - 20f) beginnend am zweiten Anschlusspunkt (22) und ebenfalls endend an der der ersten Außenkante gegenüberliegenden Außenkante des Batteriemodulgehäuses ist.

3. Batteriemodul nach Anspruch 1 oder 2, **dadurch gekennzeichnet, dass** die Kabelführung (20a - 2ßf) in Form eines Kabelkanals, der insbesondere Befestigungsmittel (24) zum Einclipsen eines datenleitenden oder stromführenden Kabels (28) aufweist, ausgeführt ist.

4. Batteriemodul nach Anspruch 3, **dadurch gekennzeichnet, dass** der Kabelkanal in mindestens eine Außenfläche des Batteriemodulgehäuses, insbesondere in einen Deckel (14) des Batteriemodulgehäuses, eingeprägt ist.

5. Batteriemodul nach einem der vorhergehenden Ansprüche, **dadurch gekennzeichnet, dass** der mindestens eine Anschlusspunkt (16, 22) für ein datenleitendes oder stromführendes Kabel (28) in Form eines Kabelsteckers ausgeführt ist.

6. Batteriemodul nach einem der vorhergehenden Ansprüche, **dadurch gekennzeichnet, dass** mindestens ein Anschlusspunkt (16, 22) für ein datenleitendes oder stromführendes Kabel (28) an einem Batteriemodulgehäusedeckel (14) vorgesehen ist, und dass zumindest ein Teil der Kabelführungen (20a - 20f) in der Ebene des Batteriemoduldeckels (14) jeweils zu einer Außenkante des Batteriemoduldeckels (14) hinführen.

7. Batteriemodul nach einem der vorhergehenden Ansprüche, **dadurch gekennzeichnet, dass** an dem ersten Anschlusspunkt (16) ein datenleitendes oder stromführendes Kabel (28) befestigt ist und dass der zweite Anschlusspunkt (22) eine Aufnahme zur Kontaktierung eines datenleitenden oder stromführenden Kabels (28) eines anderen Batteriemoduls (10) aufweist.

8. Batteriepack mit mindestens drei Batteriemodulen gemäß einem der vorhergehenden Ansprüche, **dadurch gekennzeichnet, dass** bei einer benachbarten Anordnung der Batteriemodule (10) ein einen ersten Anschlusspunkt (16, 22) des ersten Batteriemoduls (10) mit einem zweiten Anschlusspunkt (16, 22) eines zweiten Batteriemoduls (10) verbindendes und in den Kabelführungen (201 - 20f) des ersten und zweiten Batteriemoduls (10) geführtes Kabel (28) die gleiche Länge aufweist wie ein den zweiten Anschlusspunkt (16, 22) des zweiten Batteriemoduls (10) mit einem dritten Anschlusspunkt (16, 22) des dritten Batteriemoduls (10) verbindendes und in den Kabelführungen (20a - 20f) des zweiten und dritten Batteriemoduls (10) geführtes zweites datenleitendes oder stromführendes Kabel (28).

9. Batteriepack mit mindestens zwei Batteriemodulen gemäß einem der Ansprüche 1 bis 7, **dadurch gekennzeichnet, dass** bei einer benachbarten Anordnung der Batteriemodule (10) ein einen ersten Anschlusspunkt (16) des ersten Batteriemoduls (10) mit einem zweiten Anschlusspunkt (22) eines zweiten Batteriemoduls (10) verbindendes und in den Kabelführungen (20a - 20f) des ersten und zweiten Batteriemoduls (10) geführtes Kabel (28) die gleiche Länge aufweist wie ein einen zweiten Anschlusspunkt (22) des ersten Batteriemoduls (10) mit einem ersten Anschlusspunkt (16) des zweiten Batteriemoduls (10) verbindendes und in den Kabelführungen (20a - 20f) des ersten und zweiten Batteriemoduls (10) geführtes zweites datenleitendes oder stromführendes Kabel (28).

10. Batteriepack mit mindestens zwei Batteriemodulen gemäß einem der Ansprüche 1 bis 7, **dadurch gekennzeichnet, dass** zwei erste Kabelführungen (20a - 20f) an einer ersten Außenkante eines Batteriemoduldeckels (14) eines ersten Batteriemoduls (10) enden und zwei zweite Kabelführungen (20a - 20f) auf einer der ersten Außenkante benachbarten zweiten Außenkante eines Batteriemoduldeckels (14) eines zweiten Batteriemoduls (10), und dass die Summe der Kabelführungslängen der ersten Kabelführungen (20a - 20f), die an der ersten Außenkante enden, genauso groß ist wie die Summe der Kabelführungslängen der zweiten Kabelführungen (20a - 20f), die an der zweiten Außenkante enden.

11. Batteriepack nach einem der Ansprüche 8 bis 10, **dadurch gekennzeichnet, dass** die Batteriemodule (10) in einer horizontalen Ebene benachbart zueinander positioniert sind.

12. Verwendung eines Batteriemoduls nach einem der Ansprüche 1 bis 7 oder eines Batteriepacks nach einem der Ansprüche 8 bis 11 in elektrischen Energiespeichern für Kraftfahrzeuganwendungen, für portable Einrichtungen der Telekommunikation oder Datenverarbeitung sowie in stationären Speichern für insbesondere regenerativ erzeugter elektrischer Energie.

## Claims

1. Battery module having a multiplicity of battery cells in electrical contact with one another electrically in parallel or in series and having a battery module housing that is provided with at least two connection points for a data-carrying or current-channelling cable and with at least four cable guides for guiding a data-carrying or current-channelling cable connected to the connection points to a further battery module or data receiver, wherein the cable guides end at different outer edges of the battery module housing, **characterized in that** each of the cable guides (20a - 20f) has a cable guide length beginning at one of the connection points (16, 22) and ending at an outer edge of the battery module housing, and that the sum of a cable guide length of a first cable guide (20a - 20c) beginning at a first connection point (16) and ending at a first outer edge of the battery module housing and of the cable guide length of a second cable guide (20d - 20f) beginning at a second connection point (22) and ending at an outer edge, opposite the first outer edge, of the battery module housing is equal to the sum of a cable guide length of a third cable guide (20a - 20c) beginning at the first connection point (16) and ending at a second outer edge of the battery module housing and of a cable guide length of a fourth cable guide (20d - 20f) beginning at the second connection point (22) and ending at an outer edge, opposite the second outer edge, of the battery module housing.

2. Battery module having a multiplicity of battery cells in electrical contact with one another electrically in parallel or in series and having a battery module housing that is provided with at least two connection points for a data-carrying or current-channelling cable and with at least four cable guides for guiding a data-carrying or current-channelling cable connected to the connection points to a further battery module or data receiver, wherein the cable guides end at outer edges of the battery module housing, **characterized in that** each of the cable guides (20 - 20f) has a cable guide length beginning at one of the connection points (16, 22) and ending at an outer edge of the battery module housing, and that the sum of a cable guide length of a first cable guide (20a - 20c) beginning at a first connection point (16) and ending at a first outer edge of the battery module housing and of the cable guide length of a second cable guide (20d - 20f) beginning at a second connection point (22) and likewise ending at the first outer edge of the battery module housing is equal to the sum of a cable guide length of a third cable guide (20a - 20c) beginning at the first connection point (16) and ending at an outer edge, opposite the first outer edge, of the battery module housing and of a cable guide length of a fourth cable guide (20d - 20f) beginning at the second connection point (22) and likewise ending at the outer edge, opposite the first outer edge, of the battery module housing.

3. Battery module according to Claim 1 or 2, **characterized in that** the cable guide (20a - 2βf) is designed in the form of a cable duct that in particular has fastening means (24) for clipping in a data-carrying or current-channelling cable (28).

4. Battery module according to Claim 3, **characterized in that** the cable duct is impressed into at least one outer surface of the battery module housing, in particular into a cover (14) of the battery module housing.

5. Battery module according to one of the preceding claims, **characterized in that** the at least one connection point (16, 22) for a data-carrying or current-channelling cable (28) is designed in the form of a cable connector.

6. Battery module according to one of the preceding claims, **characterized in that** at least one connection point (16, 22) for a data-carrying or current-channelling cable (28) is provided on a battery module housing cover (14), and that at least some of the cable guides (20a - 20f) each lead, in the plane of the battery module cover (14), to an outer edge of the battery module cover (14).

7. Battery module according to one of the preceding claims, **characterized in that** a data-carrying or current-channelling cable (28) is fastened to the first connection point (16) and that the second connection point (22) has a recess for making contact with a data-carrying or current-channelling cable (28) of another battery module (10).

8. Battery pack having at least three battery modules according to one of the preceding claims, **characterized in that**, in an adjacent arrangement of the battery modules (10), a cable (28) connecting a first connection point (16, 22) of the first battery module (10) to a second connection point (16, 22) of a second battery module (10) and guided in the cable guides (201 - 20f) of the first and second battery module (10) has the same length as a second data-carrying or current-channelling cable (28) connecting the second connection point (16, 22) of the second battery module (10) to a third connection point (16, 22) of the third battery module (10) and guided in the cable guides (20a - 20f) of the second and third battery module (10).

9. Battery pack having at least two battery modules according to one of Claims 1 to 7, **characterized in that**, in an adjacent arrangement of the battery modules (10), a cable (28) connecting a first connection point (16) of the first battery module (10) to a second connection point (22) of a second battery module (10) and guided in the cable guides (20a - 20f) of the first and second battery module (10) has the same length as a second data-carrying or current-channelling cable (28) connecting a second connection point (22) of the first battery module (10) to a first connection point (16) of the second battery module (10) and guided in the cable guides (20a - 20f) of the first and second battery module (10).

10. Battery pack having at least two battery modules according to one of Claims 1 to 7, **characterized in that** two first cable guides (20a - 20f) end at a first outer edge of a battery module cover (14) of a first battery module (10) and two second cable guides (20a - 20f) on a second outer edge, adjacent to the first outer edge, of a battery module cover (14) of a second battery module (10), and that the sum of the cable guide lengths of the first cable guides (20a - 20f) that end at the first outer edge is the same as the sum of the cable guide lengths of the second cable guides (20a - 20f) that end at the second outer edge.

11. Battery pack according to one of Claims 8 to 10, **characterized in that** the battery modules (10) are positioned adjacent to one another in a horizontal plane.

12. Use of a battery module according to one of Claims 1 to 7 or of a battery pack according to one of Claims 8 to 11 in electrical energy storage units for motor vehicle applications, for portable telecommunications or data processing devices and in stationary storage units for in particular renewably generated electrical energy.

## Revendications

1. Module de batterie, comprenant une pluralité de cellules de batterie mises en contact électriquement les unes avec les autres électriquement en parallèle ou en série, et un boîtier de module de batterie qui est pourvu d'au moins deux points de connexion pour un câble transportant des données ou du courant, et d'au moins quatre chemins de câble pour acheminer un câble transportant des données ou du courant connecté aux points de connexion jusqu'à un autre module de batterie ou à un récepteur de données, les chemins de câble se terminant au niveau de différents bords extérieurs du boîtier de module de batterie,
**caractérisé en ce que** chacun des chemins de câble (20a à 20f) présente une longueur de chemin de câble commençant à l'un des points de connexion (16, 22) et se terminant à un bord extérieur du boîtier de module de batterie, et **en ce que** la somme d'une longueur de chemin de câble d'un premier chemin de câble (20a à 20c) commençant à un premier point de connexion (16) et se terminant à un premier bord extérieur du boîtier de module de batterie et de la longueur de chemin de câble d'un deuxième chemin de câble (20d à 20f) commençant au niveau d'un deuxième point de connexion (22) et se terminant à un bord extérieur opposé au premier bord extérieur du boîtier de module de batterie est égale à la somme d'une longueur de chemin de câble d'un troisième chemin de câble (20a à 20c) commençant au premier point de connexion (16) et se terminant à un deuxième bord extérieur du boîtier de module de batterie et d'une longueur de chemin de câble d'un quatrième chemin de câble (20d à 20f) commençant au deuxième point de connexion (22) et se terminant à un bord extérieur opposé au deuxième bord extérieur du boîtier de module de batterie.

2. Module de batterie, comprenant une pluralité de cellules de batterie mises en contact électriquement les unes avec les autres électriquement en parallèle ou en série, et un boîtier de module de batterie qui est pourvu d'au moins deux points de connexion pour un câble transportant des données ou du courant, et d'au moins quatre chemins de câble pour acheminer un câble transportant des données ou du courant connecté à l'un des points de connexion à un autre module de batterie ou à un récepteur de données, les chemins de câble se terminant aux bords extérieurs du boîtier de module de batterie,
**caractérisé en ce que** chacun des chemins de câble (20a à 20f) présente une longueur de chemin de câble commençant à l'un des points de connexion (16, 22) et se terminant à un bord extérieur du boîtier de module de batterie, et **en ce que** la somme d'une longueur de chemin de câble d'un premier chemin de câble (20a à 20c) commençant à un premier point de connexion (16) et se terminant à un premier bord extérieur du boîtier de module de batterie et de la longueur de chemin de câble d'un deuxième chemin de câble (20d à 20f) commençant à un deuxième point de connexion (22) et se terminant également au premier bord extérieur du boîtier de module de batterie est égale à la somme d'une longueur de chemin de câble d'un troisième chemin de câble (20a à 20c) commençant au premier point de connexion (16) et se terminant à un bord extérieur opposé au premier bord extérieur du boîtier de module de batterie et d'une longueur de chemin de câble d'un quatrième chemin de câble (20d à 20f) commençant au deuxième point de connexion (22) et se terminant également au bord extérieur opposé au premier bord extérieur du boîtier de module de batterie.

3. Module de batterie selon la revendication 1 ou 2, **caractérisé en ce que** le chemin de câble (20a à 2βf) est réalisé sous la forme d'un conduit de câble qui présente en particulier des moyens de fixation (24) pour encliqueter un câble transportant des données ou du courant (28).

4. Module de batterie selon la revendication 3, **caractérisé en ce que** le conduit de câble est estampé dans au moins une surface extérieure du boîtier de module de batterie, en particulier dans un couvercle (14) du boîtier de module de batterie.

5. Module de batterie selon l'une quelconque des revendications précédentes, **caractérisé en ce que** ledit au moins un point de connexion (16, 22) pour un câble transportant des données ou du courant (28) est réalisé sous la forme d'un connecteur de câble.

6. Module de batterie selon l'une quelconque des revendications précédentes, **caractérisé en ce qu'**au moins un point de connexion (16, 22) pour un câble transportant des données ou du courant (28) est prévu sur un couvercle de boîtier de module de batterie (14), et **en ce qu'**au moins une partie des chemins de câble (20a à 20f) dans le plan du couvercle de module de batterie (14) mène respectivement à un bord extérieur du couvercle de module de batterie (14).

7. Module de batterie selon l'une quelconque des revendications précédentes, **caractérisé en ce qu'**un câble transportant des données ou du courant (28) est fixé au premier point de connexion (16), et **en ce que** le deuxième point de connexion (22) présente un logement pour la mise en contact d'un câble transportant des données ou du courant (28) d'un autre module de batterie (10).

8. Bloc-batterie, comprenant au moins trois modules de batterie selon l'une quelconque des revendications précédentes, **caractérisé en ce que** dans un agencement voisin des modules de batterie (10), un câble (28) reliant un premier point de connexion (16, 22) du premier module de batterie (10) à un deuxième point de connexion (16, 22) d'un deuxième module de batterie (10) et acheminé dans les chemins de câble (201 à 20f) du premier et deuxième module de batterie (10) présente la même longueur qu'un deuxième câble transportant des données ou du courant (28) reliant le deuxième point de connexion (16, 22) du deuxième module de batterie (10) à un troisième point de connexion (16, 22) du troisième module de batterie (10) et acheminé dans les chemins de câble (20a à 20f) du deuxième et troisième module de batterie (10).

9. Bloc-batterie, comprenant au moins deux modules de batterie selon l'une quelconque des revendications 1 à 7, **caractérisé en ce que** dans un agencement voisin des modules de batterie (10), un câble (28) reliant un premier point de connexion (16) du premier module de batterie (10) à un deuxième point de connexion (22) d'un deuxième module de batterie (10) et acheminé dans les chemins de câble (20a à 20f) du premier et deuxième module de batterie (10) présente la même longueur qu'un deuxième câble transportant des données ou du courant (28) reliant un deuxième point de connexion (22) du premier module de batterie (10) à un premier point de connexion (16) du deuxième module de batterie (10) et acheminé dans les chemins de câble (20a à 20f) du premier et deuxième module de batterie (10).

10. Bloc-batterie, comprenant au moins deux modules de batterie selon l'une quelconque des revendications 1 à 7, **caractérisé en ce que** deux premiers chemins de câble (20a à 20f) se terminent à un premier bord extérieur d'un couvercle de module de batterie (14) d'un premier module de batterie (10), et deux deuxièmes chemins de câble (20a à 20f) sur un deuxième bord extérieur voisin du premier bord extérieur d'un couvercle de module de batterie (14) d'un deuxième module de batterie (10), et **en ce que** la somme des longueurs de chemin de câble des premiers chemins de câble (20a à 20f) qui se terminent au premier bord extérieur est égale à la somme des longueurs de chemin de câble des deuxièmes chemins de câble (20a à 20f) qui se terminent au deuxième bord extérieur.

11. Bloc-batterie selon l'une quelconque des revendications 8 à 10, **caractérisé en ce que** les modules de batterie (10) sont positionnés dans un plan horizontal de manière voisine les uns des autres.

12. Utilisation d'un module de batterie selon l'une quelconque des revendications 1 à 7 ou d'un bloc-batterie selon l'une quelconque des revendications 8 à 11 dans des accumulateurs d'énergie électriques destinés à des applications de véhicule automobile, des équipements portables en télécommunication ou en traitement de données ainsi que dans des accumulateurs stationnaires pour l'énergie électrique en particulier produite de manière régénérative.
